Europäisches Patentamt

European Patent Office

Office européen des brevets

(11) Veröffentlichungsnummer: **0 370 350**
**A2**

## (12) EUROPÄISCHE PATENTANMELDUNG

(21) Anmeldenummer: 89120980.1

(22) Anmeldetag: 11.11.89

(51) Int. Cl.⁵: **G03B 27/46, G03B 27/62**

(30) Priorität: 25.11.88 DE 3839854

(43) Veröffentlichungstag der Anmeldung:
**30.05.90 Patentblatt 90/22**

(84) Benannte Vertragsstaaten:
**AT FR GB**

(71) Anmelder: **Agfa-Gevaert AG**

**D-5090 Leverkusen 1(DE)**

(72) Erfinder: **Betzold, Wolfram, Ing.grad.**
**Lerchenstrasse 13**
**D-8011 Höhenkirchen(DE)**
Erfinder: **Dietrich, Karl-Heinz**
**Bozener Strasse 7**
**D-8000 München 90(DE)**
Erfinder: **Griessner, Peter**
**Sachranger Strasse 34**
**D-8000 München 90(DE)**
Erfinder: **Schepers, Hans, Dipl.-Ing.**
**Hörlstrasse 23**
**D-8068 Pfaffenhofen(DE)**

(54) **Mikrofilm-Durchlaufkamera.**

(57) Eine Mikrofilm-Durchlaufkamera mit einer Vorlagenzuführvorrichtung, einer Verfilmungsstation und einer hieran anschließenden, die Vorlagen um etwa 180° umlenkenden Transportvorrichtung, an deren Ende ein Auffangbehälter für die verfilmten Vorlagen angeordnet ist, ist so ausgestaltet, daß die Transportvorrichtung durch eine eine Umlenkbahn von etwa 180° bildende Transporttrommel (9) und eine die Transporttrommel (9) über etwa 180° umschlingende, elastische Führungsfläche (10) gebildet wird und daß die Führungsfläche (10) an Rändern (13) derart gehäusefest abgestützt ist, daß ein offener Transportkanal für die Vorlagen (8) vorhanden ist. Dadurch werden Beschädigungen der Vorlagen und Störungen beim Vorlagentransport vermieden.

FIG.1

EP 0 370 350 A2

## Mikrofilm-Durchlaufkamera

Die Erfindung betrifft eine Mikrofilm-Durchlaufkamera mit einer Vorlagenzuführvorrichtung, einer Verfilmungsstation und einer hieran anschließenden, die Vorlagen um etwa 180° umlenkenden Transportvorrichtung, an deren Ende ein Auffangbehälter für die verfilmten Vorlagen angeordnet ist.

Mikrofilm-Durchlaufkameras dieser Art sind durch auf dem Markt erhältliche Geräte bekannt. Dabei ist das Wenden der Vorlagen nach der Mikroverfilmung notwendig, damit die Vorlagen in der verfilmten Reihenfolge mit der richtigen Seitenansicht in Auffangbehältern abgelegt werden können. Das Wenden und Transportieren der Vorlagen aus der Kamera wurde bei den bekannten Geräten entweder durch Transportbänder, an denen Transportrollen in Abständen voneinander anliegen, oder durch Rei hen von Transportwalzenpaaren bewirkt. Bei diesen bekannten Transport- und Wendevorrichtungen werden die zu transportierenden Vorlagen nicht nur durch Reibung zwischen den einander gegenüberliegenden Transportmitteln mitgenommen, sondern zugleich auch einer gewissen Klemmung unterworfen. Dies führt nicht nur zu erhöhten Transportkräften, sondern kann auch, je nach der Art der Vorlagen, zu einem Schieflauf, einem Knittern und sogar zu Beschädigungen der Vorlagen führen.

Der Erfindung liegt daher die Aufgabe zugrunde, eine Mikrofilm-Kamera der eingangs genannten Art so auszugestalten, daß auch bei Vorlagen unterschiedlicher Beschaffenheit auf der Transport- und Wendestrecke nach der Verfilmungsstation ein Schieflauf oder Verknittern oder sonstige Beschädigungen der Vorlagen und damit u.U. auch Störungen in der Kamera durch Papierstau vermieden werden.

Diese Aufgabe wird erfindungsgemäß gelöst durch die Merkmale des Hauptanspruchs. Weitere vorteilhafte Merkmale der Erfindung sind den Unteransprüchen entnehmbar.

Durch eine einzige große Transporttrommel in Verbindung mit einem offenen, also die Vorlagen nicht klemmenden Transportkanal wird vermieden, daß auf die zu transportierenden Vorlagen an verschiedenen Stellen unterschiedliche Zug- und Druckkräfte ausgeübt werden, so daß ein Zerknittern oder gar Zerreißen der Vorlagen und damit auch Transportstörungen sicher vermieden werden. Die Ausbildung der Transporttrommel als untereinander gleiche, gemeinsam angetriebene, voneinander beabstan dete Reibräder hat den Vorteil, daß die Vorlagen nicht über ihre ganze Fläche der Mitnahmereibung ausgesetzt sind. Die Ausgestaltung der elastischen Führungsfläche als Gliederkette mit zwischen die Reibräder eingreifenden Vorsprüngen führt darüber hinaus zu einer gleichmäßigen Wellung der Vorlagen beim Transport, wodurch ihre Steifigkeit erhöht und ein Knittern und ein Schieflauf in besonderer Weise vermieden werden.

Die Erfindung wird anhand von Zeichnungen näher erläutert. Es zeigen

Fig. 1 eine schematische Seitenansicht einer Mikrofilm-Durchlaufkamera mit einer erfindungsgemäßen Transport- und Wendevorrichtung für verfilmte Vorlagen,

Fig. 2 einen Schnitt durch die Transport- und Wendevorrichtung nach Figur 1 quer zur Transportrichtung,

Fig. 3 einen vergrößerten Schnitt durch Teile der Führungsfläche der Transport- und Wendevorrichtung nach Figur 1.

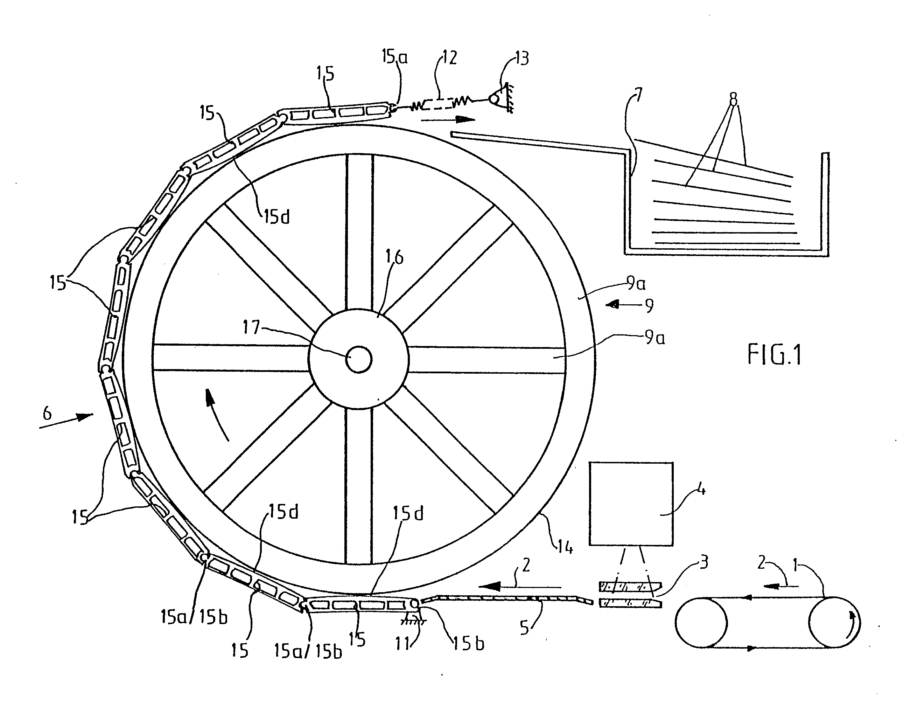

In Figur 1 sind von einer Mikrofilm-Durchlaufkamera, deren Gehäuseteile der Einfachheit halber nicht dargestellt sind, schematisch eine Vorlagenzuführvorrichtung 1, durch die nacheinander einzelne Vorlagen in Pfeilrichtung 2 transportierbar sind, eine hieran anschließende Verfilmungsstation 3 mit Belichtungs- und Kamerateilen 4, ein weiterer Transportkanal 5 für die Vorlagen, eine Wendevorrichtung 6 zum Wenden der Vorlagen um 180° und ein Auffangkorb 7 zum geordneten Ablegen der verfilmten Vorlagen 8 gezeigt. Durch die Umlenkung der verfilmten Vorlagen 8 um 180° werden diese in der Reihenfolge ihrer Verfilmung und mit ihrer beschrifteten Seite nach der gleichen Seite schauend in dem Auffangkorb 7 abgelegt. Dabei wird die Umlenkbahn der Transport- und Wendevorrichtung 6 durch eine Transporttrommel 9 bzw. durch deren halben Umfang bestimmt. Die Transporttrommel 9 weist dabei eine Oberfläche auf, die zur Mitnahme der der Transporttrommel 9 zugeführten Vorlagen 8 infolge von Reibung geeignet ist.

In dem Bereich, in dem die Vorlagen 8 um die Transporttrommel 9 herumtransportiert werden, also in einem Winkelbereich von etwa 180° über die Breite der größten vorkommenden Vorlagenbreite, wird die Transporttrommel 9 von einer elastischen Führungsfläche 10 mit einem geringen Abstand von der Oberfläche der Transporttrommel 9 umschlungen. Diese Führungsfläche 10 ist einerseits beweglich an einem Gehäuseteil 11 gelagert und andererseits an ihrem anderen Ende über eine Zugfeder 12 an einem Gehäuseteil 13 eingehängt. Die Führungsfläche 10 wird also im gesamten Bereich, in dem sie die Transporttrommel 9 umschlingt, in Richtung auf diese gezogen. Damit nun aber die Führungsfläche 10 nicht an der Reibfläche der Transporttrommel 9 aufliegt und die Vorlagen 8 klemmt, was zu Störungen im Vorlagentransport führen könnte, sind außerhalb der axialen Enden der Transporttrommel 9 und außerhalb der Transportbahn für die Vorlagen 8 feststehende kreisrunde Scheiben 9b vorgesehen, durch die ein Abstand zwischen der Transporttrommel 9 und der Führungsfläche 10 sichergestellt ist, durch den ein offener Transportkanal gebildet wird. Durch die im wesentlichen stillstehende Führungsfläche 10 und die festen Scheiben 9b werden also die Vorlagen 8 nur um die Transporttrommel 9 geführt und lediglich durch letztere mitgenommen. Die Transporttrommel 9 könnte z.B. eine Trommel mit sie in axialen Abständen umhüllenden Gummi- oder Kunststoffringen sein. Die Führungsfläche 10 könnte durch ein durchgehendes, eine innen teilzylindrische Fläche aufweisendes Metall- oder Kunststoffteil gebildet sein.

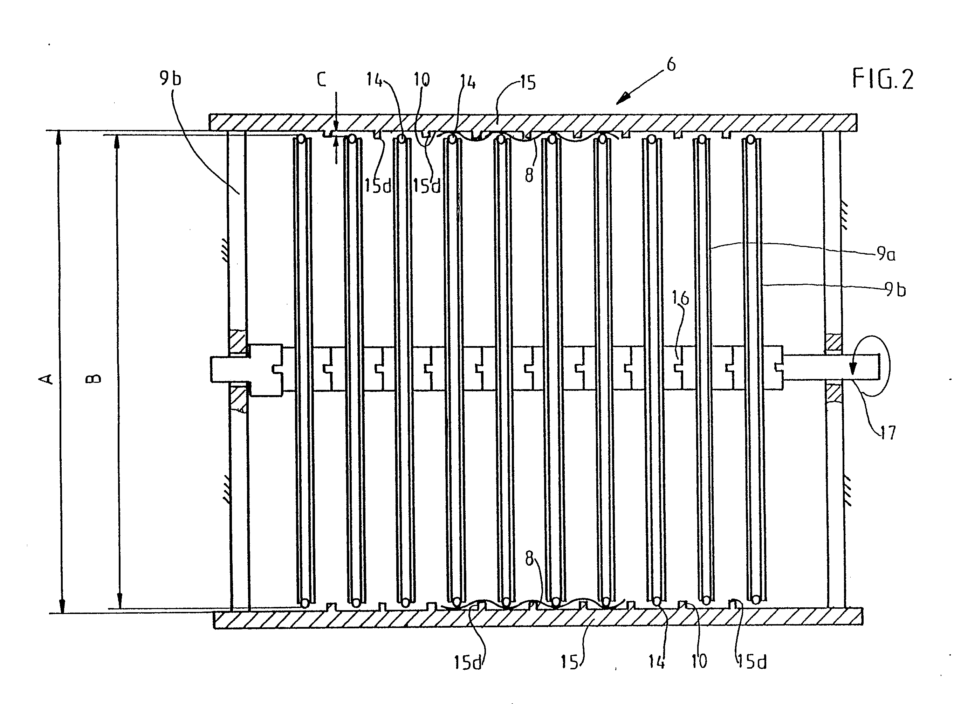

Gemäß der gezeigten, besonders vorteilhaften Ausführungsform besteht jedoch die Transporttrommel 9 aus mehreren untereinander gleichen, voneinander in axialer Richtung beabstandeten, miteinander drehfest verbundenen Scheiben oder Rädern 9a. Diese Räder 9a haben gemäß Figur 2 den Durchmesser B. Zur Bildung des Transportkanales der Transporttrommel 9 weisen die beiden äußeren Scheiben 9b einen größeren Durchmesser A auf. Zur Anbringung des Mitnahme- und Reibbelages sind am Umfang der Räder 9a Nuten vorgesehen, die in Figur 2 erkennbar sind. In diesen Nuten liegen untereinander gleiche Reibringe 14, die hier als O-Ringe ausgebildet sind. Sie könnten aber auch durch flache Riemen gebildet und auf die Räder aufgeklebt sein. Hier kann jede bekannte Ausgestaltung von Reibflächen verwendet werden. Die Tiefe des offenen Transportkanals beträgt also C gleich A/2 minus B/2. Diese Tiefe muß so bemessen werden, daß auch die Vorlagen 8 größter vorkommender Dicke noch ohne Klemmung durch die Räder 9a, 14 transportiert werden können. Die Räder 9a sind auf einer gemeinsamen Achse 16 befestigt, welche mit einer Antriebswelle 17 drehfest verbunden ist. Die Scheiben 9b größeren Durchmessers sind auf der Achse 16 oder auf der Antriebswelle 17 derart gelagert und gehäusefest fixiert, daß sie sich bei Dehnung der Antriebswelle 17 nicht mitdrehen.

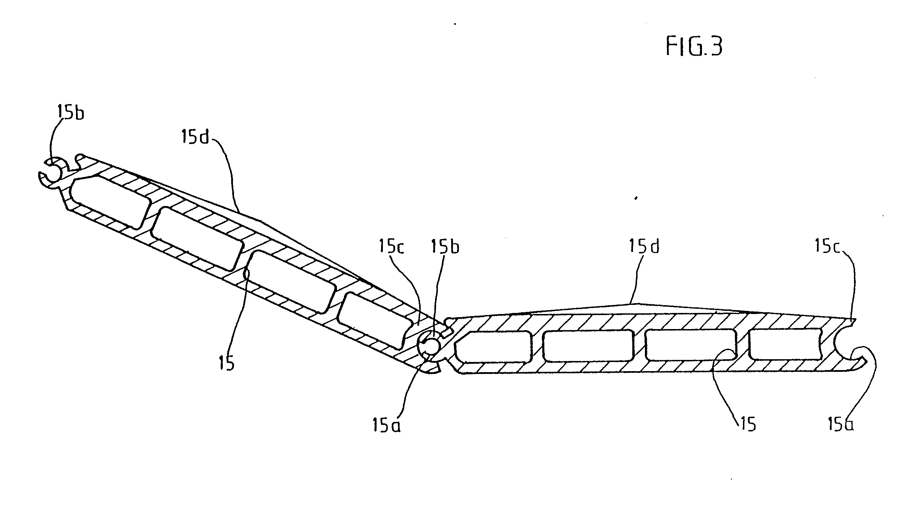

Eine weitere Besonderheit des gezeigten Ausführungsbeispieles besteht darin, daß die Führungsfläche 10 durch die Innenflächen einer Gliederkette gebildet wird, deren einzelne Glieder 15 über die Breite der Transporttrommel 9 bzw. der Gesamtzahl ihrer Räder 9a, 9b reichen und untereinander gleich sind. Längs ihrer in Richtung der Trommelbreite bzw. der Antriebswelle 17 verlaufenden Kanten sind sie beweglich aneinander angelenkt. Um diese Verbindung herstellungsmäßig einfach zu gestalten, sind die jeweils einen Endkanten 15a als Lagerausnehmungen und die jeweils anderen Endkanten 15b als in die Lagerausnehmungen 15a der Endkantenlänge nach einschiebbare Achsteile ausgebildet. Damit das Einschieben möglich ist, sind die Lagerausnehmungen 15a gabelartig ausgestaltet, wobei deren den Rädern 9a, 9b zugewandte Arme 15c kürzer sind als die nach außen gewandten Arme. Das hat zur Folge, daß gemäß Figur 3 der Achsteil 15b eines jeden Gliedes 15 durch den durch die Gabel offengelassenen Schlitz der Endkante 15a eines anderen Gliedes 15 hindurchragen kann. Außerdem können durch die verkürzten Gabelarme 15c die zusammengesteckten Glieder 15 alle unter einem Winkel zueinander geneigt liegen, so daß sie zusammen die Umfänge der Räder 9a, 9b mit dem vorgegebenen Abstand umgreifen. Das erste und das letzte Glied 15 der Gliederkette sind dann gerätefest und drehbar gelagert bzw. an der Feder 12 eingehängt.

Grundsätzlich ist die insoweit beschriebene Ausgestaltung bereits sehr vorteilhaft für die Lösung der gestellten Aufgabe. Es wurde jedoch ermittelt, daß eine weitere Verbesserung noch erreicht werden kann, wenn die zu transportierenden Vorlagen 8 in einer definierten Wellenform, deren Wellenberge und Wellentäler sich in Transportrichtung erstrecken, geführt werden. Hierdurch werden selbst dünne und biegsame Vorlagen 8 derart versteift, daß sie einwandfrei transportiert und gegen Verknittern und Einreißen geschützt sind. Um diese Wellenform der Vorlagen beim Vorlagentransport zu erreichen, weisen die Glieder 15 gegen die Transporttrommel 9 bzw. deren Räder 9a vorstehende, zwischen die Räder 9a mit Abstand von diesen eingreifende Vorsprünge 15d auf. Diese haben zweckmäßigerweise dreiecksförmiges oder bogenförmiges Profil, so daß die hierdurch bedingte, in Trommelbreite verlaufende Wellenform der Vorlagen 8 auch in Umfangsrichtung der Räder 9a an Höhe zu- und abnimmt. Die jeweils am weitesten vorspringende Kante der Vorsprünge 15d reicht vorzugsweise jeweils unter die durch die Durchmesser B der Räder 9a vorgegebene Fläche, vgl. hierzu Figur 2.

Naturgemäß sind auch noch andere Ausgestaltungen als die speziell gezeigte Ausführungsform möglich. So könnten die Glieder 15 längs ihrer Kanten über Scharnierglieder, wie bei Fensteroder Türenscharnieren, ineinandergesteckt und durch einen hierdurch gesteckten Stift gelenkig verbunden sein. Auch die Ausbildung der Glieder 15 als Hohlprofil gemäß Figur 3 ist aus Material- und Gewichtsgründen vorteilhaft, aber nicht zwingend.

**Ansprüche**

1. Mikrofilm-Durchlaufkamera mit einer Vorlagenzuführvorrichtung, einer Verfilmungsstation und einer hieran anschließenden, die Vorlagen um etwa 180° umlenkenden Transportvorrichtung, an deren Ende ein Auffangbehälter für die verfilmten Vorlagen angeordnet ist, dadurch gekennzeichnet, daß die Transportvorrichtung durch eine eine Umlenkbahn von etwa 180° bildende Transporttrommel (9) und eine die Transporttrommel (9) über etwa 180° umschlingende, elastische Führungsfläche (10) gebildet wird und daß die Führungsfläche (10) an Rändern (13) derart gehäusefest abgestützt ist, daß ein offener Transportkanal für die Vorlagen (8) vorhanden ist.

2. Kamera nach Anspruch 1, dadurch gekennzeichnet, daß die Transporttrommel (9) durch mehrere gleiche, voneinander in axialer Richtung beabstandete, drehfest miteinander verbundene Räder (9a) oder Scheiben gebildet wird, die jeweils an ihrem Umfang eine Reibfläche (14) aufweisen.

3. Kamera nach Anspruch 2, dadurch gekennzeichnet, daß die Reibflächen (14) durch in Rillen der Radumfänge eingelegte Gummi- oder Kunststoffringe (14) gebildet werden, deren Außendurchmesser untereinander gleich sind.

4. Kamera nach einem der vorhergehenden Ansprüche, dadurch gekennzeichnet, daß außerhalb der axialen Enden der Transporttrommel (9) und außerhalb des Transportkanals für die Vorlagen (8) je eine feste Scheibe (9b) größeren Durchmessers (A) als der Durchmesser (B) der übrigen Räder (9a) zuzüglich der Reibflächen (14) ist, als Abstützränder für die Führungsfläche (10 bzw. 15) angeordnet sind.

5. Kamera nach einem der vorhergehenden Ansprüche, dadurch gekennzeichnet, daß die Führungsfläche (10 bzw. 15) durch eine Gliederkette (15) gebildet wird, deren einzelne Glieder (15) über die Breite der Transporttrommel (9 bzw. 9a, 9b) reichen und längs der in der Richtung der Trommelbreite verlaufenden Kanten (15a, 15b) aneinander angelenkt sind.

6. Kamera nach Anspruch 5, dadurch gekennzeichnet, daß die Gliederkette (15) an einem ihrer Enden drehbar an einem gehäusefesten Lager (11) gelagert ist und an ihrem anderen Ende unter Zwischenschaltung einer Zugfeder (12) gehäusefest eingehängt ist.

7. Kamera nach den Ansprüchen 5 und 6, dadurch gekennzeichnet, daß die Glieder (15) durch untereinander gleiche Profilteile gebildet werden, deren eine Kante (15a) als Lagerausnehmung (15a) und deren andere Kanten (15b) als in Lagerausnehmungen (15a) einschiebbare Achsteile (15b) ausgestaltet sind.

8. Kamera nach Anspruch 7, dadurch gekennzeichnet, daß die Lagerausnehmungen (15a) als offene Gabeln ausgebildet sind, deren der Transporttrommel (9, 9a) zugewandte Arme (15c) kürzer sind als die der Transporttrommel (9, 9a) abgewandten Arme.

9. Kamera nach einem der Ansprüche 5 bis 8, dadurch gekennzeichnet, daß an die Glieder (15) gegen die Transporttrommel (9, 9a) vorstehende, zwischen deren Räder (9a) eingreifende Vorsprünge (15d) angeformt sind, die windschief zur Richtung der Trommelachse (16) oder Welle (17) dreieckiges Profil aufweisen.

10. Kamera nach Anspruch 9, dadurch gekennzeichnet, daß die Vorsprünge (15d) unter die durch die Radumfänge der übrigen Räder (9a) definierte Fläche reichen.

FIG.1

EP 0 370 350 A2

FIG.2

FIG.3

A-G 5446